# EUROPEAN PATENT SPECIFICATION

(11) **EP 1 222 762 B1**
(45) Date of publication and mention of the grant of the patent: **01.03.2006**
(21) Application number: 99955870.3
(22) Date of filing: 21.10.1999
(51) Int. Cl.: H04J 13/00

(54) **OPTICAL ACCESS TELECOMMUNICATION NETWORK**
OPTISCHES TELEKOMMUNIKATIONS-ZUGANGSNETZ
RESEAU DE TELECOMMUNICATION A ACCES OPTIQUE

(43) Date of publication of application: 17.07.2002
(73) Proprietor: Nokia Corporation, 02150 Espoo (FI)
(72) Inventor: TAHKOKORPI, Markku, FIN-02140 Espoo (FI); PIHLAJA, Juha, FIN-02170 Espoo (FI)
(74) Representative: Cohausz & Florack
(86) International application number: PCT/EP1999/007994
(87) International publication number: WO 2001/030004

(56) References cited:
- DE-A- 19 722 370
- DE-C- 19 629 530
- FATHALLAH H ET AL: "Experimental demonstration of optical fast frequency hopping-CDMA communications" 25TH EUROPEAN CONFERENCE ON OPTICAL COMMUNICATION. ECOC '99 CONFERENCE, PROCEEDINGS OF ECOC'99. 25TH EUROPEAN CONFERENCE ON OPTICAL COMMUNICATION, NICE, FRANCE, 26-30 SEPT. 1999, 26 September 1999 (1999-09-26), pages 190-191 vol.1, XP002140396 1999, Paris, France, Soc. Electr. Electron, France ISBN: 2-912328-12-8
- PU TAO ET AL: "A novel FH/TS en(de)coder for optical CDMA" ICCT'98. 1998 INTERNATIONAL CONFERENCE ON COMMUNICATION TECHNOLOGY. PROCEEDINGS (IEEE CAT. NO.98EX243), ICCT'98. 1998 INTERNATIONAL CONFERENCE ON COMMUNICATION TECHNOLOGY. PROCEEDINGS, BEIJING, CHINA, 22-24 OCT. 1998, 22 October 1998 (1998-10-22), page 4 pp. vol.2 XP002140397 1998, Beijing, China, Publising House of Constr. Mater, China ISBN: 7-80090-827-5
- EILENBERGER G ET AL: "Optical solutions for the access network" ALCATEL TELECOMMUNICATIONS REVIEW, 1998, COMPAGNIE FINANCIERE ALCATEL, UK, no. 3, 1998, pages 225-231, XP000846715 ISSN: 1242-0565

## Description

The invention refers to an optical access telecommunication network using the O-CDMA multiplexing comprising at least one local exchange unit (LE) being connected with the variety of network terminals (NT) via an passive optical network which has a splitting combining unit for downstream splitting up the data traffic to be received by the respective network terminals (NT) and for upstream combining the signals transmitted from the network terminals (ONU/NT) into one single data stream to be received by the local exchange unit. The invention also refers to a method to operate such a optical access telecommunication network.

Telecommunication networks based on a ATM passive optical network (PON) technology are known from the prior art (Journal of Lightwave, June 1999, 59-66). This kind of telecommunication network is a point-to-multipoint, cell based, optical access architecture that facilitates broad band communications between an local exchange unit (optical line terminal LE) at the central office and multiple remote optical network units (ONU's) over a purely passive optical-distribution network with a reach of typically up to 20 km. In an ATM-PON-system, many different NE's can share the capacity of a single fibre using ATM transport and passive optical splitter/combiner technology. Due to the multicast nature of the PON network, however, the cells running downstream are broadcast to all ONU's. In order to provide security against potential eavesdropping a so-called "churning" function can be individually enabled for point to point connections. This function is a byte oriented encoding sceme based on a private key (churn key) exchange between a given ONU and the local exchange unit LE. The churn key is generated by the ONU and provided to the local exchange unit on request. As an added security measure, the local exchange unit requests the churn key to be updated with a new value on a periodic basis. On the other hand, using this function still the complete data stream is transferred to and received by each network terminal which leads to the result that every customer may inherently listen to everybody's traffic (eavesdropping).

The same problem occurs in connection with TDM/TDMA-based passive optical networks (PON). When using networks with WDM-technology the security can be significantly increased by using different wavelengths for different network terminals/different customers. This solution, however, creates many logistic problems because of the different wavelengths (Journal of Lightwave Technology, Vol. 17, No. 8, August 1999, pages 1284-1292).

Therefore it is the object of the present invention in a system/method as described above to improve the security of data transmission in a very cost-effective way.

This problem is solved in a way, that passive optical filter means (OCF) are arranged between the splitting/combining unit and the network terminals (NT), the filter means using individual codes each of which being allocated to a respective network terminal (NT), thus filtering out the data traffic exclusively associated with the respective network terminal (NT).

It is the advantage of the present invention that the downstream data traffic is filtered by the optical filter means at the optical level before the signal is received at the respective network terminal. Therefore only the information directed to this terminal is received which avoids eavesdropping. Nevertheless, all receivers at the side of the network terminals can be identical to each other which makes the systems very cost effective. Moreover, the network according to the present invention does not need any electronic devices between the local exchange and the customer/network terminal location. Instead of this the system uses purely passive optical components. Compared to common TDM/TDMA-systems the network according to the invention can also add capacity because each channel can be used with a relatively high bit rate. Moreover, the systems simplifies the receiver electronics because it mainly needs to work at the bit rate level of each customer. This can also reduce the power consumption and complexity and hence the costs of the network terminal.

The location of the optical filter means can be anywhere between the splitter/combiner unit and the network terminal receiver. A preferred embodiment, however, is that the passive optical means are locally integrated into the splitting combining unit which saves costs and losses.

A further embodiment shows that the passive optical filter means comprise at least one bragg reflector and/or at least one circulator element. All these means are standard components.

Furthermore the downstream O-CDMA data stream being encoded by the local exchange unit (LE) is decoded by the passive optical filter means by using individual codes for each of the network terminals, the decoded signals then being transmitted to the network terminal in optical format. This embodiment reflects that it is one central idea of the invention to shift the decoding means from the electronic part within the network terminals to the optical part within the filter/combiner means.

The upstream O-CDMA data signals transmitted from the network terminals are encoded by the passive optical filter means by using individual codes for each of the network terminals.

The bit rate for each channel of the network terminal can be variable which is a significant economic advantage compared with TDM/TDMA-systems.

The optical code division multiple access coding is realised by a frequency and/or time hopping O-CDMA scheme. Thus, coding schemes already developed can be incorporated into this system.

In another embodiment a hierarchical system is built up in which at least one network terminal serves as a further local exchange unit being connected with a further variety of network terminals via a further passive optical network.

The invention is described on example of an embodiment in the drawings which all represent block diagrams.
- Fig. 1: shows a conventional optical access telecommunication network
- Fig. 2: shows a first embodiment of an optical access telecommunication network according to the present invention
- Fig. 3: shows a second embodiment of an optical access telecommunication network according to the present invention
- Fig. 4: shows a sketch illustrating a preferred implementation of the optical Code Filter means.

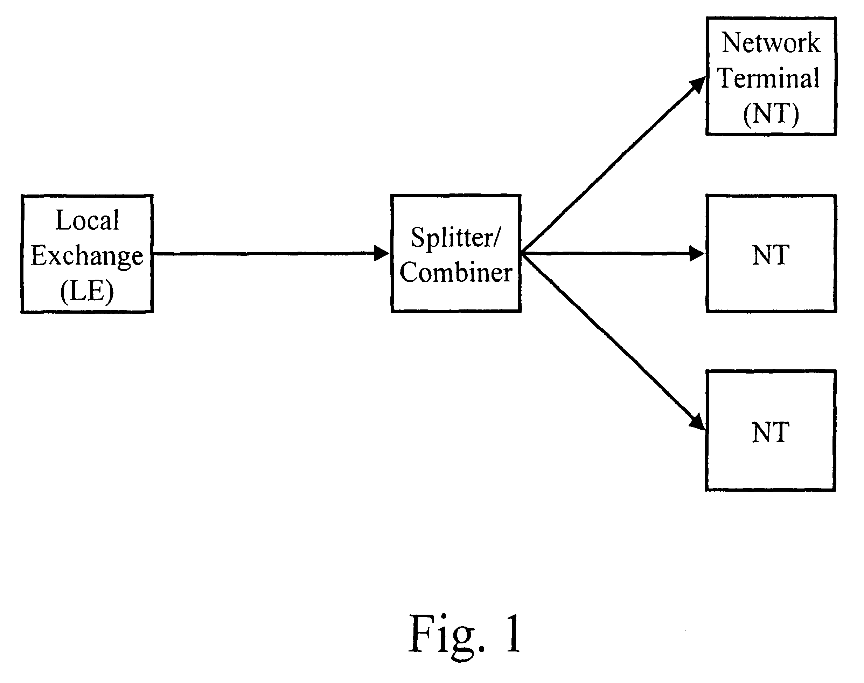

Fig. 1 shows the block diagram of a conventional optical access telecommunication network. The encoded data stream transmitted from a local exchange unit (LE) is transferred via an passive optical network through a splitter/combiner unit to a variety of network terminals (NT). In the splitting/combining unit the data stream transmitted from the LE is reproduced according to the numbers of channels of the respective network terminals. Each of the network terminals comprises a transceiver for receiving the complete data stream. In order to provide security against eavesdropping each of the network terminals has a private key which is exchanged between the respective network terminal and the local exchange unit.

In reverse direction (upstream), which is not shown in the drawings, each of the network terminals (NT) transmits signals which are combined in the splitter/combiner unit to a data stream received by the local exchange (LE).

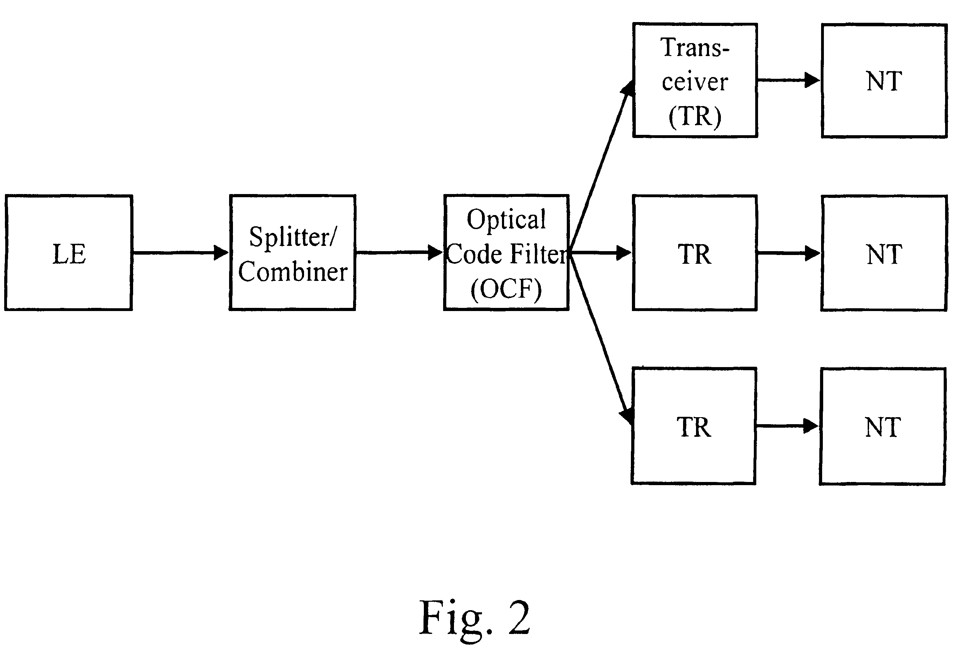

Fig. 2 which is a block diagram of system according to the first embodiment of the invention, shows in addition to the system in Fig. 1 that an optical code filter (OCF) is comprised being located between the splitter/combiner unit and the variety of network terminals. Accordingly, optically coded division multiple access coding signals (O-CDMA-signals) are sent from the local exchange (LE) in a single fibre to the splitter/combiner unit and the optical code filter (OCF) where they are decoded by a passive optical device usually realised by a chain of bragg reflectors and a circulator element. The decoding operation is performed by using different codes for each of the network terminal outputs. The decoded signal is then transmitted to the respective customer, still in optical format. Each of the optical paths between the optical code filter (OCF) and the respective network terminal thus carries only the data which are designated for the associated NT unit. The optical data is then received at the respective transceiver unit of the network terminal. Accordingly, each of the transceivers at the customer side can be identical to the other one.

While the main security advantage of the present invention is realised in downstream transmission, the same concept can be used for the upstream transmission in reverse way (not shown by the arrows).

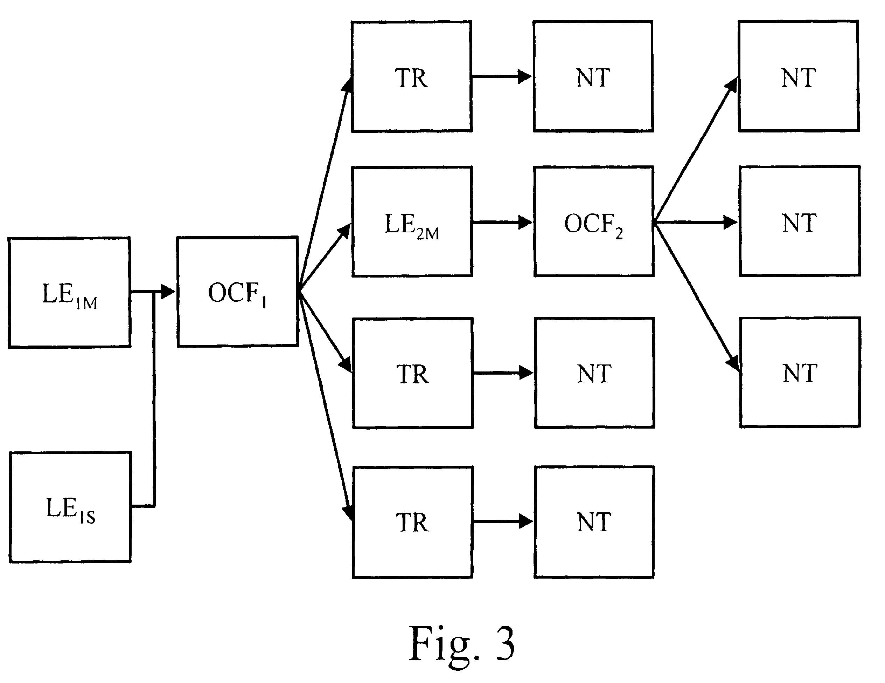

Fig. 3 shows the second embodiment of the present invention. Compared with the embodiment of Fig. 2, the local exchange unit LE_{1M} has a parallel local exchange unit which works as a slave unit (LE_{1S}) to take over the control when the LE_{1M} master unit fails. The optical code filter OCF₁ having incorporated the splitter/combiner function is operating to four different outputs, three of which are network terminals with associated transceivers and one of which being a second local exchange unit (LE_{2M}) from which the data are transferred to a second optical code filter unit (OCF₂) having incorporated a further splitter/combiner unit. From the output of the second optical code filter unit (OCF₂) the data streams are transferred to three further network terminals.

Therefore this set up shows a hierarchical system built up by at least two of the blocks shown in Fig. 2.

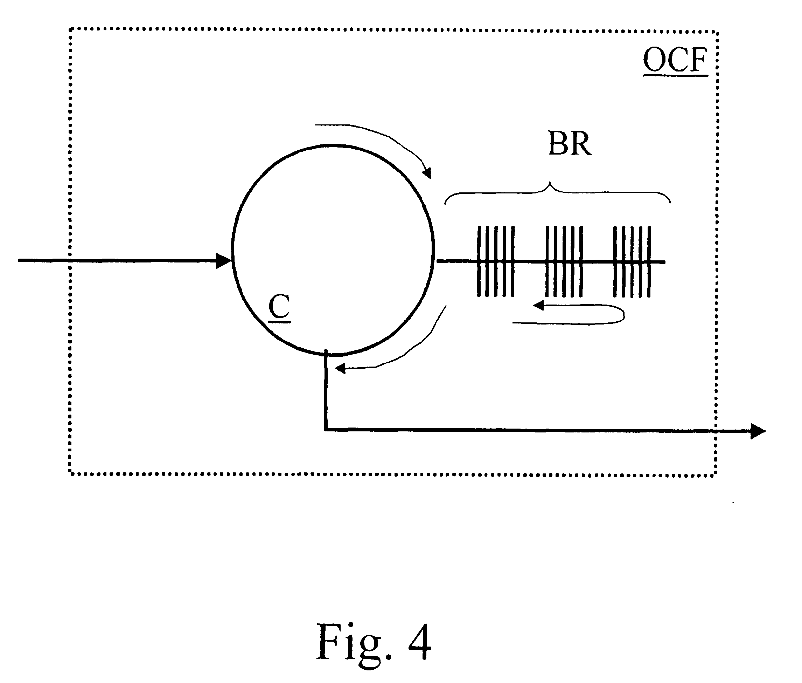

Fig. 4 shows an illustration sketch for the passive optical code filter means OCF, OCF₁, OCF₂ shown in Figs. 2, 3. The Optical Code Filter comprises a circulator C and series of Bragg reflectors BR. The incoming optical data stream is passing the circulator C according to the arrows shown in Fig. 4. By using the chain/series of Bragg reflectors BR the coding/encoding of the optical data is implemented.

## Claims

1. Optical access telecommunication network using the O-CDMA multiplexing comprising at least one local exchange unit (LE) being connected with a variety of network terminals (NT) via a passive optical network which has a splitting/combining unit for downstream splitting up the data traffic to be received by the.respective network terminals (NT) and for upstream combining the signals transmitted from the network terminals (ONU/NT) into one single data stream to be received by the local exchange unit, **characterised in that** passive optical filter means (OCF) are arranged in the passive optical network between the splitting/combining unit and the network terminals (NT) for decoding at least the downstream data traffic, the filter means using individual codes each of which being allocated to a respective receiving network terminal (NT), thus filtering out the data traffic exclusively associated with the respective network terminal (NT).

2. Optical access telecommunication network according to claim 1, **characterised in that** the passive optical filter means are locally integrated into the splitting/combining unit.

3. Optical access telecommunication network according to claims 1 or 2, **characterised in that** the passive optical filter means comprise at least one bragg reflector and/or at least one circulator element.

4. Optical access telecommunication network according to claims 1 to 3, **characterised in that** the downstream O-CDMA data stream being encoded by the local exchange unit (LE) is decoded by the passive optical filter means by using individual codes for each of the network terminals, the decoded signals then being transmitted to the respective network terminal in optical format.

5. Optical access telecommunication network according to claims 1 to 3, **characterised in that** the upstream O-CDMA data signals transmitted from the network terminals are encoded by the passive optical filter means by using individual codes for each of the network terminals.

6. Optical access telecommunication network according to claim 5, **characterised in that** the bit rate for each network terminal channel is variable.

7. Optical access telecommunication network according to claims 1 to 6, **characterised in that** the optical code division multiple access coding is realised by a frequency and/or time hopping O-CDMA scheme.

8. Optical access telecommunication network according to claims 1 to 7, **characterised in that** a hierarchical system is built up in which at least one network terminal serves as a further local exchange unit (LE₂) being connected with a further variety of network terminals via a further passive optical network.

9. Method for operating an optical access telecommunication network using the O-CDMA multiplexing the network comprising at least one local exchange unit (LE) being connected with a variety of network terminals (NT) via a passive optical network which has a splitting/combining unit for downstream splitting up the data traffic to be received by the respective network terminals (NT) and for upstream combining the signals transmitted from the network terminals (ONU/NT) into one single data stream to be received by the local exchange unit, **characterised in that** at least the downstream data stream is decoded by passive optical filter means (OCF) being arranged in the passive optical network between the splitting/combining unit and the network terminals (NT), whereby the filter means are using individual codes each of which being allocated to a respective receiving network terminal (NT), for filtering out the data traffic exclusively associated with the respective network terminal (NT).

## Patentansprüche

1. Optisches Telekommunikationszugangsnetz, welches das O-CDMA-Multiplexen verwendet und wenigstens eine Ortsvermittlungseinheit (LE) aufweist, die über ein passives optisches Netz, das eine Spaltungs/Vereinigungseinheit zum Aufspalten in Abwärtsrichtung des Datenverkehrs, der von den jeweiligen Netzendgeräten (NT) empfangen werden soll, und zum Vereinigen in Aufwärtsrichtung der Signale, die von den Netzendgeräten (ONU/NT) gesendet werden sollen, zu einem einzigen Datenstrom, der von der Ortsvermittlungseinheit empfangen werden soll, aufweist, mit einer Vielfalt von Netzendgeräten (NT) verbunden ist, **dadurch gekennzeichnet, dass** passive optische Filtermittel (OFC) in dem passiven optischen Netz zwischen der Spaltungs/Vereinigungseinheit und den Netzendgeräten (NT) zum Decodieren wenigstens des Datenverkehrs in Abwärtsrichtung angeordnet sind, wobei die Filtermittel individuelle Codes verwenden, welche jeweils einem jeweiligen Netzendgerät (NT) zugeordnet werden, wodurch der Datenverkehr ausgefiltert wird, der ausschließlich mit dem jeweilige Netzendgerät (NT) verbunden ist.

2. Optisches Telekommunikationszugangsnetz nach Anspruch 1, **dadurch gekennzeichnet, dass** die passiven optischen Filtermittel örtlich in der Spaltungs/Vereinigungseinheit integriert sind.

3. Optisches Telekommunikationszugangsnetz nach Anspruch 1 oder 2, **dadurch gekennzeichnet, dass** die passiven optischen Filtermittel wenigstens einen Bragg-Reflektor und/oder wenigstens ein Zirkulatorelement aufweisen.

4. Optisches Telekommunikationszugangsnetz nach Anspruch 1 bis 3, **dadurch gekennzeichnet, dass** der O-CDMA-Datenstrom in Abwärtsrichtung, der durch die Ortsvermittlungseinheit (LE) codiert wird, durch die passiven optischen Filtermittel durch Verwenden von individuellen Codes für jedes der Netzendgeräte decodiert wird, wobei die decodierten Signale dann im optischen Format an das jeweilige Netzendgerät gesendet werden.

5. Optisches Telekommunikationszugangsnetz nach Anspruch 1 bis 3, **dadurch gekennzeichnet, dass** die O-CDMA-Datensignale in Aufwärtsrichtung, die von den Netzendgeräten gesendet werden, durch die passiven optischen Filtermittel durch Verwenden von individuellen Codes für jedes der Netzendgeräte codiert werden.

6. Optisches Telekommunikationszugangsnetz nach Anspruch 5, **dadurch gekennzeichnet, dass** die Bitrate für jeden Netzendgerätkanal veränderlich ist.

7. Optisches Telekommunikationszugangsnetz nach Anspruch 1 bis 6, **dadurch gekennzeichnet, dass** die optische Codemultiplexzugriffscodierung durch ein O-CDMA-Schema mit Frequenz- und/oder Zeitsprung realisiert wird.

8. Optisches Telekommunikationszugangsnetz nach Anspruch 1 bis 7, **dadurch gekennzeichnet, dass** ein hierarchisches System aufgebaut wird, in welchem wenigstens ein Netzendgerät als eine weitere Ortsvermittlungseinheit (LE₂) dient, die über ein weiteres passives optisches Netz mit einer weiteren Vielfalt von Netzendgeräten verbunden ist.

9. Verfahren zum Betreiben eines optischen Telekommunikationszugangsnetzes, welches O-CDMA-Multiplexen verwendet, wobei das Netz wenigstens eine Ortsvermittlungseinheit (LE) aufweist, die über ein passives optisches Netz, das eine Spaltungs/Vereinigungseinheit zum Aufspalten in Abwärtsrichtung des Datenverkehrs, der von den jeweiligen Netzendgeräten (NT) empfangen werden soll, und zum Vereinigen in Aufwärtsrichtung der Signale, die von den Netzendgeräten (ONU/NT) gesendet werden sollen, zu einem einzigen Datenstrom, der von der Ortsvermittlungseinheit empfangen werden soll, aufweist, mit einer Vielfalt von Netzendgeräten (NT) verbunden ist, **dadurch gekennzeichnet, dass** wenigstens der Datenstrom in Abwärtsrichtung durch passive optische Filtermittel (OFC), die in dem passiven optischen Netz zwischen der Spaltungs/Vereinigungseinheit und den Netzendgeräten (NT) angeordnet sind, decodiert werden, wobei die Filtermittel individuelle Codes verwenden, welche zum Ausfiltern des Datenverkehrs, der ausschließlich mit dem jeweilige Netzendgerät (NT) verbunden ist, jeweils einem entsprechenden empfangenden Netzendgerät (NT) zugeordnet werden.

## Revendications

1. Réseau de télécommunications à accès optique utilisant le multiplexage O-CDMA comprenant au moins une unité de commutation locale (LE) qui est connectée à une variété de terminaux de réseau (NT) par le biais d'un réseau optique passif comprenant une unité de division / combinaison pour la division sur le trajet descendant du trafic de données destiné à être reçu par les terminaux de réseau respectifs (NT) et pour la combinaison sur le trajet montant des signaux émis par les terminaux de réseau (ONU / NT) en un unique flux de données destiné à être reçu par l'unité de commutation locale, **caractérisé en ce que** des moyens de filtrage optique passifs (OCF) sont disposés à l'intérieur du réseau optique passif entre l'unité de division / combinaison et les terminaux de réseau (NT) dans le but de décoder au moins le trafic de données sur le trajet descendant, les moyens de filtrage utilisant des codes individuels qui sont attribués chacun à un terminal de réseau respectif (NT), filtrant ainsi le trafic de données exclusivement associé au terminal de réseau respectif (NT).

2. Réseau de télécommunications à accès optique selon la revendication 1, **caractérisé en ce que** les moyens de filtrage optique passifs sont localement intégrés à l'unité de division / combinaison.

3. Réseau de télécommunications à accès optique selon les revendications 1 ou 2, **caractérisé en ce que** les moyens de filtrage optique passifs comprennent au moins un réflecteur de Bragg et / ou au moins un élément de circulateur.

4. Réseau de télécommunications à accès optique selon les revendications 1 à 3, **caractérisé en ce que** le flux de données O-CDMA sur le trajet descendant qui est encodé par l'unité de commutation locale (LE), est décodé par les moyens de filtrage optique passifs en utilisant des codes individuels pour chacun des terminaux de réseau, les signaux décodés étant alors transmis vers le terminal de réseau respectif dans un format optique.

5. Réseau de télécommunications à accès optique selon les revendications 1 à 3, **caractérisé en ce que** les signaux de données O-CDMA sur le trajet montant transmis par les terminaux de réseau sont encodés par les moyens de filtrage optique passifs en utilisant des codes individuels pour chacun des terminaux de réseau.

6. Réseau de télécommunications à accès optique selon la revendication 5, **caractérisé en ce que** le débit binaire pour chacune des voies d'un terminal de réseau est variable.

7. Réseau de télécommunications à accès optique selon les revendications 1 à 6, **caractérisé en ce que** le codage à accès optique multiple à répartition par code est réalisé selon une technique de modulation de données O-CDMA par répartition en fréquence et / ou par répartition dans le temps.

8. Réseau de télécommunications à accès optique selon les revendications 1 à 7, **caractérisé en ce qu'**un système hiérarchique est créé dans lequel au moins un terminal de réseau agit en tant qu'une unité de commutation locale supplémentaire (LE₂) qui est connectée à une variété supplémentaire de terminaux de réseau par le biais d'un autre réseau optique passif.

9. Procédé de commande d'un réseau de télécommunications à accès optique utilisant le multiplexage O-CDMA, le réseau comprenant au moins une unité de commutation locale (LE) qui est connectée à une variété de terminaux de réseau (NT) par le biais d'un réseau optique passif comprenant une unité de division / combinaison pour la division sur le trajet descendant du trafic de données destiné à être reçu par les terminaux de réseau respectifs (NT) et pour la combinaison sur le trajet montant des signaux émis par les terminaux de réseau (ONU / NT) en un unique flux de données destiné à être reçu par l'unité de commutation locale, **caractérisé en ce que** au moins le flux de données sur le trajet descendant est décodé par des moyens de filtrage optique passifs (OCF) qui sont disposés à l'intérieur du réseau optique passif entre l'unité de division / combinaison et les terminaux de réseau (NT), moyennant quoi les moyens de filtrage utilisent des codes individuels qui sont attribués chacun à un terminal de réseau de réception respectif (NT) dans le but de filtrer le trafic de données exclusivement associé au terminal de réseau respectif (NT).
